# EUROPEAN PATENT SPECIFICATION

(11) **EP 3 672 762 B1**
(45) Date of publication and mention of the grant of the patent: **24.11.2021**
(21) Application number: 18847907.5
(22) Date of filing: 25.08.2018
(51) Int. Cl.: B25J 11/00, G05D 1/02, G01C 21/32

(54) **SELF-PROPELLED ROBOT PATH PLANNING METHOD, SELF-PROPELLED ROBOT AND STORAGE MEDIUM**
WEGPLANUNGSVERFAHREN FÜR SELBSTFAHRENDEN ROBOTER, SELBSTFAHRENDER ROBOTER UND SPEICHERMEDIUM
PROCÉDÉ DE PLANIFICATION DE TRAJECTOIRE DE ROBOT AUTOMOTEUR, ROBOT AUTOMOTEUR ET SUPPORT D'INFORMATIONS

(30) Priority: 25.08.2017 CN 201710743056
(43) Date of publication of application: 01.07.2020
(60) Divisional application: 21199359.7
(73) Proprietor: Ecovacs Robotics Co., Ltd., Suzhou, Jiangsu 215168 (CN)
(72) Inventor: TANG, Jinju, Suzhou Jiangsu 215011 (CN)
(74) Representative: Viering, Jentschura & Partner mbB Patent- und Rechtsanwälte
(86) International application number: PCT/CN2018/102368
(87) International publication number: WO 2019/037790

(56) References cited:
- CN-A- 103 268 729
- CN-A- 105 469 445
- CN-A- 105 629 970
- CN-A- 106 444 780
- US-A1- 2005 131 581
- US-A1- 2011 010 033
- US-A1- 2013 231 779
- US-A1- 2016 144 505
- US-A1- 2017 166 299
- US-B1- 9 594 377

## Description

### RELATED APPLICATION

This application claims the benefit under 35 U.S.C. §119 of CN patent application No. 201710743056.X, filed on August 25th, 2017.

### FIELD

The embodiments discussed herein are related to a self-propelled robot path planning method, self-propelled robot and storage medium.

### BACKGROUND

To provide an efficient walk of a self-propelled robot in its operation space, an environmental map with spatial information contained therein may be created, for example, to aid the self-propelled robot in making a judgment as to whether it can make a certain motion or perform a certain task in addition to path planning. However, existing two-dimensional maps fail to properly offer guidance to a robot, for example, due to the self-propelled robot having a relatively different height. Additionally, data quantity resulting from usage of three-dimensional maps may result in large amounts of computational overhead, as a result of which the time for data processing and operation may be prolonged. Accordingly, in some conventional systems and methods, self-propelled robots may have a comparatively low working efficiency, poor capability of environment awareness, and/or irrational walking paths.

The subject matter claimed herein is not limited to embodiments that solve any disadvantages or that operate only in environments such as those described above. Rather, this background is only provided to illustrate one example technology area where some embodiments described herein may be practiced. Prior art document D1 (US 2013/231779 A1) discloses a mobile inspection robot, which includes a robot body and a drive system supporting the robot body and configured to maneuver the robot over a work surface (see ABSTRACT of D1). Prior art document D2 (US 9594377 B1) discloses an auto-height swing adjustment, where An example implementation includes (i) receiving sensor data that indicates topographical features of an environment in which a robotic device is operating, (ii) processing the sensor data into a topographical map that includes a two-dimensional matrix of discrete cells, the discrete cells indicating sample heights of respective portions of the environment, (iii) determining, for a first foot of the robotic device, a first step path extending from a first lift-off location to a first touch-down location, (iv) identifying, within the topographical map, a first scan patch of cells that encompass the first step path, (v) determining a first high point among the first scan patch of cells; and (vi) during the first step, directing the robotic device to lift the first foot to a first swing height that is higher than the determined first high point (see ABSTRACT of D2).

### SUMMARY

A self-propelled robot path planning method may include acquiring, by sensor assemblies arranged on a self-propelled robot walking in a to-be-operated space at different heights, information of obstacles at different heights. The sensor assemblies are arranged at different heights divide the to-be-operated space into a plurality of detection layers. The method may also include generating a multilayer environmental map of the to-be-operated space. The multilayer environmental map comprises a plurality of two-dimensional maps, each of the plurality of two-dimensional maps corresponds to the information of obstacles detected at each respective detection layer. Additionally, the method may include processing information in the multilayer environmental map to obtain processed data. The method may include planning a walking path for the self-propelled robot according to the processed data.

### BRIEF DESCRIPTION OF THE DRAWINGS

Example embodiments will be described and explained with additional specificity and detail through the use of the accompanying drawings in which:
FIG. 1 illustrates a flow chart in accordance with an example embodiment;
FIG. 2a illustrates a flow chart in accordance with another example embodiment;
FIG. 2b illustrates another flow chart in accordance with the example embodiment of FIG. 2a;
FIG. 3 illustrates a structural diagram of a device for planning a path for a self-propelled robot in accordance with yet another example embodiment; and
FIG. 4 illustrates a schematic structural block diagram of a self-propelled robot in accordance with an example embodiment.

### DESCRIPTION OF EXAMPLE EMBODIMENTS

According to aspects of the present disclosure, a self-propelled robot path planning method, a self-propelled robot and a storage medium is discussed herein, for example, so that a walking path for the self-propelled robot can be planned according to synthetically processed data that may be obtained by acquiring the information of obstacles at different heights and generating a multilayer environmental map of the to-be-operated space(s). The self-propelled robot path planning method, the self-propelled robot and the storage medium of the present disclosure may reduce computational overhead of conventional systems and methods, increase computing speed and improve path planning with more working efficiency.

A self-propelled robot path planning method may include the following blocks (e.g., steps). Although described as discrete blocks, various blocks may be divided into additional blocks, combined into fewer blocks, or eliminated, depending on the desired implementation. At block 100, information may be acquired by a self-propelled robot walking in a to-be-operated space, in which the information of obstacles may be at different heights. Additionally or alternatively, at block 100, a multilayer environmental map of the to-be-operated space may be generated. At block 200, the method may include synthetically processing information in the multilayer environmental map to obtain synthetically processed data. At block 300, the method may include planning a walking path for the self-propelled robot according to the synthetically processed data.

In some embodiments, the multilayer environmental map in block 100 may contain a plurality of two-dimensional maps, with two-dimensional maps corresponding to the information of obstacles at different heights. The synthetic processing in block 200 may include: uniting the information of obstacles in two-dimensional maps to obtain the information of one or more of the obstacles of the to-be-operated space. Additionally or alternatively, the synthetic processing in block 200 may include intersecting walkable regions in two-dimensional maps to obtain walkable regions.

Additionally or alternatively, the synthetic processing in block 200 may include: uniting the information of obstacles in two-dimensional maps to obtain the information of one or more of the obstacles of the to-be-operated space; and intersecting walkable regions in two-dimensional maps to obtain the information of walkable regions in the to-be-operated space. The walkable regions may include one or more of the regions in the to-be-operated space that have a distance from obstacles not less than a particular value. The particular value may be about 10-30 centimeters, for example, about 20 centimeters.

In some embodiments, the multilayer map may also be a two-dimensional map that corresponds to synthetic distribution information of the obstacles at different heights. For ease of identification, the information of obstacles at different plane heights may be labeled in different ways.

In these or other embodiments, and in view of potential problems posed in view of manual intervention of path planning, obtaining the synthetically processed data in block 200 may further comprise the following blocks (e.g., steps). Although described as discrete blocks, various blocks may be divided into additional blocks, combined into fewer blocks, or eliminated, depending on the desired implementation. At block 210, it may be determined whether addition of a new walking path is recommended (e.g., suggested, required, etc.); if so, the method may include correspondingly updating the multilayer environmental map and then proceeding with block 300; otherwise, the method may proceed to block 300.

Furthermore, in block 100, there may be numerous ways in which the self-propelled robot walks in the to-be-operated space. In these or other embodiments, the self-propelled robot may walk in such a way that the self-propelled robot scans and detects peripheral regions on site, and walks towards a next undetected region until one or more of the regions in the to-be-operated space may be detected.

Additionally or alternatively, the self-propelled robot may walk in such a way that the self-propelled robot enters (e.g., directly) in the middle position of the to-be-operated space, scans and detects peripheral regions at the middle position, and walks towards a next undetected region until one or more of the regions in the to-be-operated space may be detected. Additionally or alternatively, the self-propelled robot may walk in a way of traversal walking.

In some embodiments, planning a walking path for the self-propelled robot in block 300 may include selecting, in one of the walkable regions, a starting point and an endpoint for the self-propelled robot, the shortest path between the starting point and the endpoint being the walking path.

A self-propelled robot may include a sensor assembly, a processor and a memory. The sensor assembly may be coupled with the processor and configured to acquire information of obstacles at different heights when the self-propelled robot walks in a to-be-operated space. The memory may be configured to store a program.

The processor may be coupled with the memory and configured to execute the program stored in the memory to: generate a multilayer environmental map of the to-be-operated space according to the acquired information of obstacles at different heights; synthetically process information in the multilayer environmental map to obtain synthetically processed data; and plan a walking path for the self-propelled robot according to the synthetically processed data.

A computer-readable storage medium that stores a computer program may be included, wherein the computer program may be executed by a computer to: generate a multilayer environmental map of a to-be-operated space according to information of obstacles at different heights acquired by a self-propelled robot when walking in the to-be-operated space; synthetically process information in the multilayer environmental map to obtain synthetically processed data; and plan a walking path for the self-propelled robot according to the synthetically processed data.

Thus, according to one or more aspects of the present disclosure, one or more embodiments provided herein may include a self-propelled robot path planning method that can plan a walking path for the self-propelled robot according to synthetically processed data obtained by acquiring the information of obstacles at different heights and generating a multilayer environmental map of the to-be-operated space.

In any one of embodiments, the information of one or more of the obstacles of the to-be-operated space at least comprises: the information of one of the obstacles of the to-be-operated space, the information of some of the obstacles of the to-be-operated space and the information of all the obstacles of the to-be-operated space.

Embodiments of the present disclosure will be explained with reference to the accompanying drawings.

### Embodiment 1:

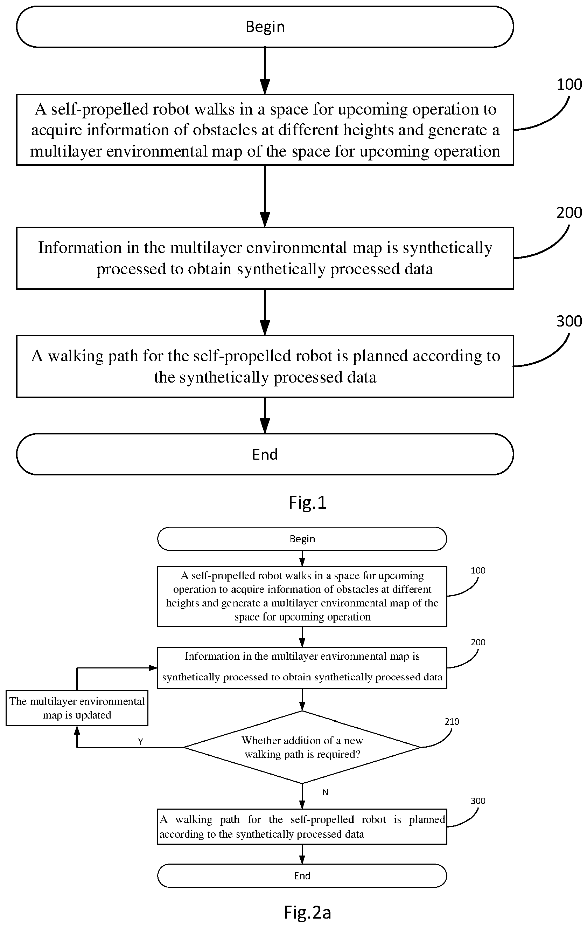

FIG. 1 is a flow chart of a self-propelled robot path planning method of the present disclosure. As illustrated in FIG. 1, the present disclosure provides a self-propelled robot path planning method comprising the following blocks (e.g., steps). Although described as discrete blocks, various blocks may be divided into additional blocks, combined into fewer blocks, or eliminated, depending on the desired implementation.

At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data. At block 300, a walking path for the self-propelled robot may be planned according to the synthetically processed data.

In some embodiments, the multilayer environmental map in block 100 may include a plurality of two-dimensional maps, with the two-dimensional maps corresponding to the information of obstacles at different heights. The plurality of two-dimensional maps described above may be implemented through detection by sensor assemblies arranged on the body of the self-propelled robot at different heights. Examples of sensor assemblies may include a laser ranging sensor assembly, an infrared sensor assembly, an ultrasonic sensor assembly, and the like. Within a particular height range, the sensor assemblies arranged at different heights may divide the to-be-operated space into a plurality of detection layers, and may generate the multilayer environmental map by recording the information of obstacles detected at each respective detection layer. In some embodiments, the height range over which the to-be-operated space can be detected may be dictated by the working ranges of the various sensor assemblies.

The synthetic processing in block 200 may include uniting the information of obstacles in two-dimensional maps to obtain the information of one or more of the obstacles of the to-be-operated space. For example, as long as there is an obstacle at a certain location on at least one layer of a multilayer environmental map, it may be determined that the self-propelled robot may not make a certain motion (e.g., pass over this location). This location may be a region in which the self-propelled robot may not walk (e.g., due to difficulty, physical constraints, safety, etc.). In some embodiments, another part of the to-be-operated space different than the above non-walkable region may be the walkable region. Path planning for the self-propelled robot may be conducted within the range of this walkable region.

Furthermore, in block 100, the self-propelled robot may walk in the to-be-operated space in numerous ways. In these or other embodiments, the self-propelled robot may scan and detect peripheral regions on site, and may walk towards a next undetected region until one or more of the regions in the to-be-operated space may be detected. As referred to in the present disclosure, the term "on site" may refer to a location of the self-propelled robot on startup. In some embodiments, the self-propelled robot may walk in the to-be-operated space to acquire the information of obstacles at different heights, which may be achieved through the following blocks (e.g., steps). Although described as discrete blocks, various blocks may be divided into additional blocks, combined into fewer blocks, or eliminated, depending on the desired implementation.

At block 101, the information of obstacles at different heights around the current location of the robot may be acquired after startup. At block 102, a walking direction away from and/or without obstacles may be determined based on the acquired information of obstacles at different heights.

At block 103, if a walking direction is determined, the robot may walk a preset distance (e.g., about 50 centimeters) in the determined walking direction. Upon completion of walking the preset distance in the predetermined direction, the robot may enter a next detection region.

At block 104, in the next detection region, the information of obstacles at different heights therearound may be acquired. Additionally or alternatively, the information of obstacles at different heights acquired in the next detection region may be compared with the information of obstacles at different heights corresponding to regions where information may be already acquired to determine whether the next detection region may be a detected region. If yes, one or more regions of the to-be-operated space may be detected; otherwise, block 102 may be performed again.

At block 105, if a plurality of walking directions is determined, the robot may walk a preset distance in one of the walking directions. Upon completion of walking the preset distance in the walking direction, the robot may enter a next detection region.

At block 106, in the next detection region, the information of obstacles at different heights therearound may be acquired. Additionally or alternatively, the information of obstacles at different heights acquired in the next detection region may be compared with the information of obstacles at different heights corresponding to regions where information may be already acquired to determine whether the next detection region may be a detected region. If yes, the method may proceed to block 107, and otherwise, return to block 102.

At block 107, it may be determined whether there is a walking direction not taken among the plurality of walking directions determined in the above block 105. If yes, the robot may walk a preset distance in the walking direction not taken to enter a next detection region, and block 106 may be performed again; otherwise, one or more regions of the to-be-operated space may be detected.

In some embodiments, planning a walking path for the self-propelled robot in block 300 may include: selecting, in one of the walkable regions, a starting point and an endpoint for the self-propelled robot, the shortest path between the starting point and the endpoint being the walking path. When the self-propelled robot moves or is directed to move from its current location to the starting point to begin operation after the completion of the path planning, a preferred walking route may be planned based on the created multilayer environmental map and the robot may walk following the planned walking route.

Thus, according to in embodiment 1 and/or other embodiments of the present disclosure, the self-propelled robot may acquire the two-dimensional multilayer environmental map using onsite detection. Additionally or alternatively, the self-propelled robot may select, from the multilayer environmental map, a union set of the information of obstacles to obtain a walkable region, and may conduct path planning in this walkable region.

### Embodiment 2:

The self-propelled robot path planning method provided in this embodiment and/or others of the present disclosure may include the following blocks (e.g., steps). Although described as discrete blocks, various blocks may be divided into additional blocks, combined into fewer blocks, or eliminated, depending on the desired implementation.

At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data. At block 300, a walking path for the self-propelled robot may be planned according to the synthetically processed data.

In some embodiments, the multilayer environmental map in block 100 may include a plurality of two-dimensional maps, with two-dimensional maps corresponding to the information of obstacles at different heights. The synthetic processing in block 200 may include intersecting (e.g., overlapping) walkable regions in two-dimensional maps to obtain walkable regions. For example, as long as a certain location on one or more layers in the multilayer environmental map may be determined to be the walkable region, these locations may include the walkable regions.

The walkable regions may include one or more of the regions in the to-be-operated space that have a distance from obstacles not less (e.g., greater) than a particular value. For example, the particular value may range from about 10 to 30 centimeters, e.g., about 20 centimeters. During actual work (e.g., walking/movement of the robot), the obstacle regions and the walkable regions may be taken into consideration, and the regions in the walkable region that may be spaced a certain distance apart from obstacles may be selected as walking paths (e.g., preferred walking paths and/or ranked walking paths).

Furthermore, in block 100, the self-propelled robot may walk in the to-be-operated space in such a way that the self-propelled robot may enter (e.g., proceeds directly) to a middle position of the to-be-operated space, scan and detect peripheral regions at the middle position, and walk towards a next undetected region until one or more of the regions in the to-be-operated space may be detected.

In some embodiments, a middle position tag (e.g., a dot, a circle, or text) may be provided in the middle position of the to-be-operated space. The self-propelled robot may capture images of surroundings at its location after startup. If an image containing the middle position tag is captured, a moving direction and a moving distance for the self-propelled robot may be determined by identifying information such as a size and a position of the middle position tag in the image. The self-propelled robot may move the moving distance in the determined moving direction into the middle position of the to-be-operated space. If no image including the middle position tag is captured, the robot may turn a preset angle (e.g., about 15 degrees, about 30 degrees, etc.) to continue capturing until an image containing the middle position tag is captured.

There may be a plurality of walking directions starting from the middle position. After completing detection in one walking direction, the robot may return to the middle position so as to detect information in another walking direction. The detection process may be the same as or similar to the process described in other embodiments of the present disclosure.

In some embodiments, planning a walking path for the self-propelled robot in block 300 may include selecting, in the walkable region, a starting point and an endpoint for the self-propelled robot, the shortest path between the starting point and the endpoint being the walking path.

Thus, in embodiment 2 and/or other embodiments of the present disclosure, the self-propelled robot may acquire the two-dimensional multilayer environmental map by entering (e.g., directly) into the middle position of the to-be-operated space and initiating detection for peripheral regions from the middle position. The intersection (e.g., overlap or an amount of overlap) of the walkable regions may be selected from the multilayer environmental map and path planning may be conducted on the basis of this intersection.

### Embodiment 3:

The self-propelled robot path planning method may include the following blocks (e.g., steps). Although described as discrete blocks, various blocks may be divided into additional blocks, combined into fewer blocks, or eliminated, depending on the desired implementation.

At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data. At block 300, a walking path for the self-propelled robot may be planned according to the synthetically processed data.

The synthetic processing in block 200 may include uniting (e.g., combining, stitching, etc.) the information of obstacles in two-dimensional maps to obtain the information of one or more of the obstacles of the to-be-operated space; and intersecting the walkable regions in two-dimensional maps to obtain the information of the walkable regions of the to-be-operated space.

The walkable regions may include one or more of the regions in the to-be-operated space that have a distance from obstacles not less than a particular value. In some embodiments, a threshold distance from obstacles may range from about 10 to about 30 centimeters, for example, about 20 centimeters.

Additionally or alternatively, the multilayer map In these or other embodiments may be two-dimensional. However, synthetic distribution information corresponding to the obstacles at different heights may be present on the two-dimensional map. For ease of identification, the obstacles and/or any associated information thereof at different plane heights may be labeled in different ways. For example, the obstacles and/or any associated information thereof at different heights may be distinguished from one another using patterns, colors, numbers, and other suitable identifiers.

Additionally or alternatively, in block 100, the self-propelled robot may walk in the to-be-operated space in a way of traversal walking, e.g. straight-line reciprocating walk, m-shaped walk or zigzag walk to detect one or more of the regions in the to-be-operated space.

In some embodiments, planning a walking path for the self-propelled robot in S300 may include selecting, in the walkable region, a starting point and an endpoint for the self-propelled robot, the shortest path between the starting point and the endpoint being the walking path.

Thus in embodiment 3 and/or other embodiments of the present disclosure, by walking in the region for upcoming operation in a traversal manner, the self-propelled robot may detect the two-dimensional map having the synthetic distribution information corresponding to the obstacles at different heights, and may select, from the two-dimensional map, a union set of the information of obstacles and the intersection of the walkable regions at the same time (or about the same time). And based on the integration of the above two elements, path planning may be conducted.

### Embodiment 4:

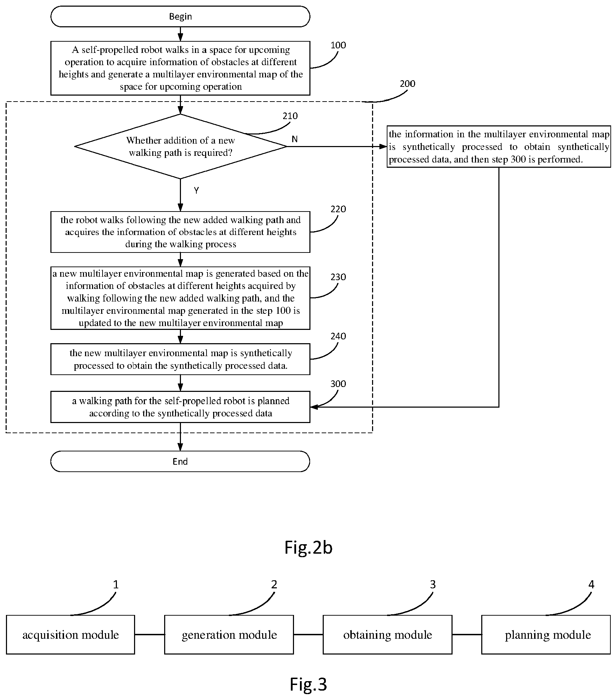

FIG. 2a and FIG. 2b are flow charts in accordance with embodiment 4 of the present disclosure. As illustrated in FIG. 2a, this embodiment provides a self-propelled robot path planning method comprising the following blocks (e.g., steps). Although described as discrete blocks, various blocks may be divided into additional blocks, combined into fewer blocks, or eliminated, depending on the desired implementation.

At block 100, a self-propelled robot may walk in a to-be-operated space to acquire information of obstacles at different heights and generate a multilayer environmental map of the to-be-operated space. At block 200, information in the multilayer environmental map may be synthetically processed to obtain synthetically processed data.

In these or other embodiments, and in view of potential problems posed in view of manual intervention of path planning, block 200 may be implemented through the following blocks (e.g., steps). Although described as discrete blocks, various blocks may be divided into additional blocks, combined into fewer blocks, or eliminated, depending on the desired implementation. At block 210, it may be determined whether to add a new walking path. If so, a next block 220 may be performed; otherwise, the information in the multilayer environmental map may be synthetically processed to obtain synthetically processed data, and block 300 may be performed. At block 220, the robot may walk following a newly added walking path and may acquire the information of obstacles at different heights during the walking process.

At block 230, the multilayer environmental map generated in block 100 may be updated based on the information of obstacles at different heights acquired by walking following the newly added walking path. At block 240, the updated multilayer environmental map may be synthetically processed to obtain the synthetically processed data before proceeding to block 300. At block 300, a walking path for the self-propelled robot may be planned according to the synthetically processed data.

In other embodiments, as illustrated in FIG. 2b, and in view of potential problems posed in view of manual intervention of path planning, block 200 may also be implemented through the following blocks (e.g., steps). Although described as discrete blocks, various blocks may be divided into additional blocks, combined into fewer blocks, or eliminated, depending on the desired implementation.

At block 210', it may be determined whether to add a new walking path. If so, a next block 220' may be performed; otherwise, the information in the multilayer environmental map may be synthetically processed to obtain synthetically processed data, and block 300 may be performed.

At block 220', the robot may walk following a newly added walking path and may acquire the information of obstacles at different heights during the walking process. At block 230', a new multilayer environmental map may be generated based on the information of obstacles at different heights acquired by walking following the newly added walking path, and the multilayer environmental map generated in block 100 may be updated to the new multilayer environmental map. At block 240' the new multilayer environmental map may be synthetically processed to obtain the synthetically processed data before proceeding to the above block 300.

As described above, determining whether to add a new walking path may be performed after the self-propelled robot receives a path manually input by a user, wherein the user may input a path by means of an input device (e.g., a touch screen, or an input control key) on the self-propelled robot, or by voice using a voice acquisition and identification device on the self-propelled robot, etc.

In these or other embodiments, the multilayer environmental map in block 100 may include a plurality of two-dimensional maps, with two-dimensional maps corresponding to the information of obstacles at different heights. Furthermore, the way of walking of the self-propelled robot in the to-be-operated space in block 100, the way of synthetic processing in block 200, or the way of planning a walking path for the self-propelled robot in block 300 may be any of those used in embodiments 1 to 3 described above.

Thus in embodiment 4 and/or other embodiments of the present disclosure, the self-propelled robot may acquire the two-dimensional multilayer environmental map by means of onsite detection. Additionally or alternatively, the self-propelled robot may select, from the multilayer environmental map, a union set of the information of obstacles to obtain the walkable region, and may conduct path planning in this walkable region. In these or other embodiments that may be based on automatic mapping and point selection as well as walking path planning, the self-propelled robot may be imparted with the capabilities of human participation and of addition or alteration of new walking paths. Additionally or alternatively, before the final walking path is planned, a judgment (e.g., an input) as to whether manual intervention exists (e.g., has been provided or will be provided) may be added; if the judgment result indicates "Yes", map information may be updated according to the information regarding manual intervention before the final walking path may be planned; and if the judgment result indicates "No", then path planning may be conducted (e.g., directly).

The newly added walking path in the above block 210 may be a path input through a manual operation. For example, the element of manual intervention may be added to avoid the case where the generated multilayer environmental map may not be accurate enough due to missing of some detection paths during the automatic search process of the self-propelled robot. In this manner, accuracy of the multilayer environmental map can be improved. Additionally or alternatively, the self-propelled robot may acquire the information of obstacles by walking and detecting the operation space following the manually added walking path, thereby speeding up the building of the multilayer environmental map.

In these or other embodiments, the present disclosure provides a self-propelled robot path planning method in which the information of obstacles at different heights may be acquired and a multilayer environmental map of the to-be-operated space may be generated, synthetically processed data may be obtained and a walking path for the self-propelled robot may be planned.

FIG. 3 is a schematic diagram illustrating a structure of a device for planning a path for a self-propelled robot provided in the present disclosure, wherein the device may be hardware of an embedded program integrated into the self-propelled robot, application software installed in the self-propelled robot, and/or tools software embedded into the operating system of the self-propelled robot. In some embodiments, as illustrated in FIG. 3, the device may include: an acquisition module 1, a generation module 2, an obtaining module 3, and a planning module 4. The acquisition module 1 may be configured to acquire information of obstacles at different heights when the self-propelled robot walks in a to-be-operated space. The generation module 2 may be configured to generate a multilayer environmental map of the to-be-operated space according to the acquired information of obstacles at different heights. The obtaining module 3 may be configured to synthetically process information in the multilayer environmental map to obtain synthetically processed data. The planning module 4 may be configured to plan a walking path for the self-propelled robot according to the synthetically processed data.

Further, the multilayer environmental map may include a plurality of two-dimensional maps, with two-dimensional maps corresponding to the information of obstacles at different heights. Additionally or alternatively, the obtaining module 3 may also be configured to unite the information of obstacles in one or more of the two-dimensional maps to obtain information of obstacles in the to-be-operated space.

Additionally or alternatively, the obtaining module 3 may be configured to intersect walkable regions in one or more of the two-dimensional maps to obtain walkable regions. Additionally or alternatively, the obtaining module 3 may be configured to unite the information of obstacles in one or more of the two-dimensional maps to obtain information of obstacles in the to-be-operated space, and intersect walkable regions in one or more of the two-dimensional maps to obtain information of walkable regions in the to-be-operated space.

In some embodiments, the walkable regions may include one or more of the regions in the to-be-operated space that have a distance from obstacles not less than a particular value. For example, the particular value may be about 10-30 centimeters. In some embodiments, the multilayer map may be a two-dimensional map that corresponds to synthetic distribution information of obstacles at different heights. Additionally or alternatively, the information of obstacles at different plane heights may be labeled in different ways.

In these or other embodiments, the device also may include a determination module and an updating module. The determination module may be configured to determine whether a new walking path is to be added. The updating module may be configured to: when the determination module determines to add a new walking path, guide the self-propelled robot in walking a new added walking path and acquire information of obstacles at different heights during walking; and update the multilayer environmental map generated by the generation module based on the information of obstacles at different heights acquired by walking the new added walking path, thereby causing the obtaining module to synthetically process the information in the updated multilayer environmental map to obtain synthetically processed data. Correspondingly, the obtaining module may also be configured to synthetically process information in the multilayer environmental map generated by the generation module to obtain synthetically processed data when the determination module determines that a new walking path is not to be added.

In some embodiments, the self-propelled robot may walk in the to-be-operated space in such a way that the self-propelled robot may scan and detect peripheral regions on site, and may walk towards a next undetected region until one or more of the regions in the to-be-operated space may be detected.

Additionally or alternatively, the self-propelled robot may walk in the to-be-operated space in such a way that the self-propelled robot may enter (e.g., directly) into the middle position of the to-be-operated space, scan and detect peripheral regions at the middle position, and walk towards a next undetected region until one or more of the regions in the to-be-operated space may be detected. Additionally or alternatively, the self-propelled robot may walk in the to-be-operated space in a way of traversal walking.

In some embodiments, the planning module 4 may be configured to select, in the walkable region, a starting point and an endpoint for the self-propelled robot, a shortest path between the starting point and the endpoint being the walking path.

The device for planning a path for a self-propelled robot in accordance with the one or more embodiments of the present disclosure may implement the technical solutions described in the above method embodiments, and reference may be made to corresponding contents in the above embodiments for example implementations of one or more of the above modules or units, which will not be redundantly described herein. The device embodiments described above are merely illustrative, wherein the modules described as separate members may be or not be physically separated, and the members displayed as modules may be or not be physical units, e.g., may be located in one place, or may be distributed to a plurality of different places. Part or all of the modules may be selected accordingly to implement the objectives of the solutions in the embodiments of the present disclosure.

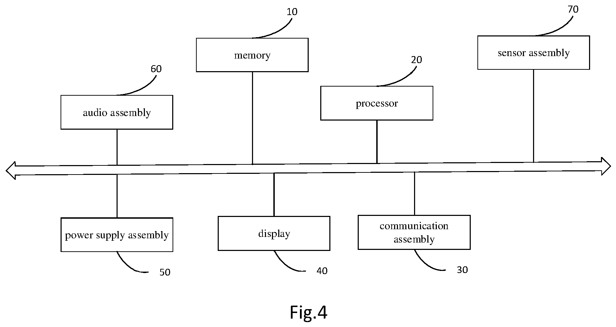

FIG. 4 is a block diagram illustrating a structure of a self-propelled robot provided in the present disclosure. As illustrated in FIG. 4, the self-propelled robot may include a sensor assembly 70, a processor 20 and a memory 10. The sensor assembly 70 may be coupled with the processor 20 and may be configured to acquire information of obstacles at different heights when the self-propelled robot walks in a to-be-operated space. The memory 10 may be configured to store a program. The processor 20 may be coupled with the memory 10 and configured to execute the program stored in the memory 10 to:
generate a multilayer environmental map of the to-be-operated space according to the acquired information of obstacles at different heights;
synthetically process information in the multilayer environmental map to obtain synthetically processed data; and
plan a walking path for the self-propelled robot according to the synthetically processed data.

The memory 10 may be configured to store data of various types to support operations on the self-propelled robot. In some embodiments, the memory 10 may include computer-readable storage media or one or more computer-readable storage mediums for carrying or having computer-executable instructions or data structures stored thereon. Such computer-readable storage media may be any available media that may be accessed by a general-purpose or special-purpose computer, such as the processor 20. By way of example, and not limitation, such computer-readable storage media may include non-transitory computer-readable storage media including static random access memory (SRAM), Random Access Memory (RAM), Read-Only Memory (ROM), Electrically Erasable Programmable Read-Only Memory (EEPROM), a programmable read-only memory (PROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 20 to perform a certain operation or group of operations as described in this disclosure. In these and other embodiments, the term "non-transitory" as explained in the present disclosure should be construed to exclude only those types of transitory media that were found to fall outside the scope of patentable subject matter in the Federal Circuit decision of *In re Nuijten,* 500 F.3d 1346 (Fed. Cir. 2007). Combinations of the above may also be included within the scope of computer-readable media.

The above sensor assembly 70 may include an image pick-up sensor assembly, a laser ranging sensor assembly, an infrared sensor assembly, an ultrasonic sensor assembly, and/or the like. One or more sensor assemblies may include a plurality of sensors and the positions of the plurality of sensors may be different. For example, a laser ranging sensor may be disposed at the top of the self-propelled robot, while an ultrasonic sensor may be disposed at the front end of a walking direction and an infrared sensor may be disposed at the rear end of the walking direction, etc. Other suitable positions and combinations of sensors disposed on/within the self-propelled robot are contemplated.

Further, as illustrated in FIG. 4, the self-propelled robot may comprise other assemblies such as a communication assembly 30, a power supply assembly 50, an audio assembly 60, a display 40 and the like. FIG. 4 schematically illustrates example assemblies, which does not mean that the self-propelled robot may include only the assemblies illustrated in FIG. 4.

Correspondingly, an embodiment of the present disclosure also provides a computer-readable storage medium that stores a computer program. The computer program, when executed by a computer, can implement the blocks (e.g., elements, steps, functions, etc.) with respect to the self-propelled robot path planning method of the present disclosure.

In accordance with common practice, the various features illustrated in the drawings may not be drawn to scale. The illustrations presented in the present disclosure are not meant to be actual views of any particular apparatus (e.g., device, system, etc.) or method, but are merely idealized representations that are employed to describe various embodiments of the disclosure. Accordingly, the dimensions of the various features may be arbitrarily expanded or reduced for clarity. In addition, some of the drawings may be simplified for clarity. Thus, the drawings may not depict all of the components of a given apparatus (e.g., device) or all operations of a particular method.

Terms used in the present disclosure and especially in the appended claims (e.g., bodies of the appended claims) are generally intended as "open" terms (e.g., the term "including" should be interpreted as "including, but not limited to," the term "having" should be interpreted as "having at least," the term "includes" should be interpreted as "includes, but is not limited to," etc.).

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is explicitly recited, such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc. For example, the use of the term "and/or" is intended to be construed in this manner.

Further, any disjunctive word or phrase presenting two or more alternative terms, whether in the description, claims, or drawings, should be understood to contemplate the possibilities of including one of the terms, either of the terms, or both terms. For example, the phrase "A or B" should be understood to include the possibilities of "A" or "B" or "A and B."

Additionally, the use of the terms "first," "second," "third," etc., are not necessarily used in the present disclosure to connote a specific order or number of elements. Generally, the terms "first," "second," "third," etc., are used to distinguish between different elements as generic identifiers. Absence a showing that the terms "first," "second," "third," etc., connote a specific order, these terms should not be understood to connote a specific order. Furthermore, absence a showing that the terms first," "second," "third," etc., connote a specific number of elements, these terms should not be understood to connote a specific number of elements. For example, a first widget may be described as having a first side and a second widget may be described as having a second side. The use of the term "second side" with respect to the second widget may be to distinguish such side of the second widget from the "first side" of the first widget and not to connote that the second widget has two sides.

All examples and conditional language recited herein are intended for pedagogical objects to aid the reader in understanding the present disclosure and the concepts contributed by the inventor to furthering the art, and are to be construed as being without limitation to such specifically recited examples and conditions.

## Claims

1. A self-propelled robot path planning method, comprising:
acquiring (100), by sensor assemblies arranged on a self-propelled robot walking in a to-be-operated space at different heights, information of obstacles at different heights; wherein the sensor assemblies arranged at different heights divide the to-be-operated space into a plurality of detection layers;
generating a multilayer environmental map of the to-be-operated space; wherein the multilayer environmental map comprises a plurality of two-dimensional maps, each of the plurality of two-dimensional maps corresponds to the information of obstacles detected at each respective detection layer;
processing (200) information in the multilayer environmental map to obtain processed data; and
planning (300) a walking path for the self-propelled robot according to the processed data.

2. The method according to claim 1, wherein the processing (200) includes uniting the information of obstacles in each two-dimensional map to obtain the information of one or more of the obstacles of the to-be-operated space.

3. The method according to claim 1, wherein the processing (200) includes intersecting walkable regions in each two-dimensional map to obtain walkable regions.

4. The method according to claim 1, wherein the processing (200) comprises:
uniting the information of obstacles in each two-dimensional map to obtain the information of one or more of the obstacles of the to-be-operated space; and
intersecting walkable regions in each two-dimensional map to obtain the information of walkable regions of the to-be-operated space.

5. The method according to claim 2, wherein the walkable regions include one or more of the regions in the to-be-operated space that have a distance from obstacles not less than a particular value.

6. The method according to claim 5, wherein the particular value is 10-30 centimeters.

7. The method according to claim 5, wherein planning a walking path for the self-propelled robot includes selecting, in one of the walkable regions, a starting point and an endpoint for the self-propelled robot, a shortest path between the starting point and the endpoint being the walking path.

8. The method according to claim 1, wherein the multilayer map is a two-dimensional map corresponding to distribution information of the obstacles at different heights.

9. The method according to claim 8, wherein the information of obstacles at different plane heights is labeled in different ways.

10. The method according to claim 1, wherein obtaining processed data in further comprises:
determining whether a new walking path is to be added; and
if the new walking path is to be added, correspondingly updating the multilayer environmental map and then proceeding; or
if the new walking path is not to be added, proceeding without updating the multilayer environmental map.

11. The method according to claim 1, wherein the self-propelled robot walks in the to-be-operated space in such a way that the self-propelled robot scans and detects peripheral regions on site, and walks towards a next undetected region until one or more of the regions in the to-be-operated space are detected.

12. The method according to claim 1, wherein the self-propelled robot walks in the to-be-operated space in such a way that the self-propelled robot directly enters a middle position of the to-be-operated space, scans and detects peripheral regions at the middle position, and walks towards a next undetected region until one or more of the regions in the to-be-operated space are detected.

13. The method according to claim 1, wherein the self-propelled robot walks in the to-be-operated space in a way of traversal walking.

14. A self-propelled robot, comprising: sensor assemblies (70) arranged on the self-propelled robot at different heights, a processor (20) and a memory (10); wherein the sensor assemblies arranged at different heights divide the to-be-operated space into a plurality of detection layers;
wherein the sensor assemblies (70) are coupled with the processor (20) and configured to acquire information of obstacles at different heights when the self-propelled robot walks in a to-be-operated space;
wherein the memory (10) is configured to store a program; and
wherein the processor (20) is coupled with the memory and configured to execute the program stored in the memory to:
generate a multilayer environmental map of the to-be-operated space according to the acquired information of obstacles at different heights; wherein the multilayer environmental map comprises a plurality of two-dimensional maps, each of the plurality of two-dimensional maps corresponds to the information of obstacles detected at each respective detection layer;
process information in the multilayer environmental map to obtain processed data; and
plan a walking path for the self-propelled robot according to the processed data.

15. A computer-readable storage medium that stores a computer program, wherein the computer program is executed by a computer to:
generate a multilayer environmental map of a to-be-operated space according to information of obstacles at different heights acquired by sensor assemblies arranged on a self-propelled robot when walking in the to-be-operated space at different heights; wherein the sensor assemblies arranged at different heights divide the to-be-operated space into a plurality of detection layers;
process information in the multilayer environmental map to obtain processed data; wherein the multilayer environmental map comprises a plurality of two-dimensional maps, each of the plurality of two-dimensional maps corresponds to the information of obstacles detected at each respective detection layer; and
plan a walking path for the self-propelled robot according to the processed data.

## Patentansprüche

1. Selbstfahrender-Roboter-Streckenplanung-Verfahren, aufweisend:
Akquirieren (100), mittels Sensorvorrichtungen, welche in unterschiedlichen Höhen an einem selbstfahrenden Roboter angeordnet sind, welcher sich in einem Bearbeitungsraum fortbewegt, von Informationen über Hindernisse in unterschiedlichen Höhen, wobei die Sensorvorrichtungen, welche in unterschiedlichen Höhen angeordnet sind, den Bearbeitungsraum in eine Mehrzahl von Detektionsschichten einteilen,
Erzeugen einer mehrschichtigen Umgebungskarte des Bearbeitungsraums, wobei die mehrschichtige Umgebungskarte eine Mehrzahl von zweidimensionalen Karten aufweist, wobei jede von der Mehrzahl von zweidimensionalen Karten mit den Informationen über Hindernisse korrespondiert, welche in jeder jeweiligen Detektionsschicht detektiert werden,
Verarbeiten (200) von Informationen in der mehrschichtigen Umgebungskarte, um verarbeitete Daten zu erlangen, und
Planen (300) einer Fortbewegungsstrecke für den selbstfahrenden Roboter gemäß den verarbeiteten Daten.

2. Verfahren gemäß Anspruch 1, wobei das Verarbeiten (200) aufweist: Zusammenführen der Informationen über Hindernisse in jeder zweidimensionalen Karte, um die Informationen über eines oder mehrere von den Hindernissen des Bearbeitungsraums zu erlangen.

3. Verfahren gemäß Anspruch 1, wobei das Verarbeiten (200) aufweist: Überschneiden befahrbarer Bereiche in jeder zweidimensionalen Karte, um befahrbare Bereiche zu erlangen.

4. Verfahren gemäß Anspruch 1, wobei das Verarbeiten (200) aufweist:
Zusammenführen der Informationen über Hindernisse in jeder zweidimensionalen Karte, um die Informationen über eines oder mehrere von den Hindernissen des Bearbeitungsraums zu erlangen, und
Überschneiden von befahrbaren Bereichen in jeder zweidimensionalen Karte, um die Informationen über befahrbare Bereiche des Bearbeitungsraums zu erlangen.

5. Verfahren gemäß Anspruch 2, wobei die befahrbaren Bereiche einen oder mehrere von den Bereichen in dem Bearbeitungsraum aufweisen, welche einen Abstand von Hindernissen aufweisen, welcher nicht geringer als ein bestimmter Wert ist.

6. Verfahren gemäß Anspruch 5, wobei der bestimmte Wert 10 bis 30 Zentimeter beträgt.

7. Verfahren gemäß Anspruch 5, wobei das Planen einer Fortbewegungsstrecke für den selbstfahrenden Roboter aufweist: Auswählen, in einem von den befahrbaren Bereichen, eines Startpunkts und eines Endpunkts für den selbstfahrenden Roboter, wobei ein kürzester Weg zwischen dem Startpunkt und dem Endpunkt die Fortbewegungsstrecke ist.

8. Verfahren gemäß Anspruch 1, wobei die mehrschichtige Karte eine zweidimensionale Karte ist, welche mit den Verteilungsinformationen über die Hindernisse in verschiedenen Höhen korrespondiert.

9. Verfahren gemäß Anspruch 8, wobei die Informationen über Hindernisse in verschiedenen Ebenenhöhen unterschiedlich gekennzeichnet werden.

10. Verfahren gemäß Anspruch 1, wobei das Erlangen von verarbeiteten Daten ferner aufweist:
Ermitteln, ob eine neue Fortbewegungsstrecke hinzugefügt werden soll, und
wenn die neue Fortbewegungsstrecke hinzugefügt werden soll, entsprechendes Aktualisieren der mehrschichtigen Umgebungskarte und dann Fortfahren, oder
wenn die neue Fortbewegungsstrecke nicht hinzugefügt werden soll, Fortfahren ohne Aktualisieren der mehrschichtigen Umgebungskarte.

11. Verfahren gemäß Anspruch 1, wobei der selbstfahrende Roboter sich in dem Bearbeitungsraum derart fortbewegt, dass der selbstfahrende Roboter Randbereiche am Einsatzort abscannt und detektiert, und sich in Richtung zu einem nächsten nicht-detektierten Bereich hin fortbewegt, bis einer oder mehrere von den Bereichen in dem Bearbeitungsraum detektiert sind.

12. Verfahren gemäß Anspruch 1, wobei sich der selbstfahrende Roboter in dem Bearbeitungsraum derart fortbewegt, dass er direkt an eine mittige Position des Bearbeitungsraums hineingelangt, Randbereiche an der mittigen Position abscannt und detektiert, und sich in Richtung zu einem nächsten nicht-detektierten Bereich hin fortbewegt, bis einer oder mehrere von den Bereichen in dem Bearbeitungsraum detektiert sind.

13. Verfahren gemäß Anspruch 1, wobei sich der selbstfahrende Roboter in dem Bearbeitungsraum in einer Transversal-Fortbewegung-Weise fortbewegt.

14. Selbstfahrender Roboter, aufweisend:
Sensorvorrichtungen (70), welche an dem selbstfahrenden Roboter in unterschiedlichen Höhen angeordnet sind, einen Prozessor (20) und eine Speichervorrichtung (10), wobei die Sensorvorrichtungen, welche in unterschiedlichen Höhen angeordnet sind, den Bearbeitungsraum in eine Mehrzahl von Detektionsschichten einteilen,
wobei die Sensorvorrichtungen (70) mit dem Prozessor (20) verbunden und konfiguriert sind, um Informationen über Hindernisse in unterschiedlichen Höhen zu erfassen, wenn sich der selbstfahrende Roboter in einem Bearbeitungsraum fortbewegt,
wobei die Speichervorrichtung (10) konfiguriert ist, um ein Programm zu speichern, und
wobei der Prozessor (20) mit der Speichervorrichtung verbunden und konfiguriert ist, um das Programm auszuführen, welches in der Speichervorrichtung gespeichert ist, um:
eine mehrschichtige Umgebungskarte des Bearbeitungsraums gemäß den akquirierten Informationen über Hindernisse in unterschiedlichen Höhen zu erzeugen, wobei die mehrschichtige Umgebungskarte eine Mehrzahl von zweidimensionalen Karten aufweist, wobei jede von der Mehrzahl von zweidimensionalen Karten mit den Informationen über in jeder jeweiligen Detektionsschicht detektierten Hindernisse korrespondiert,
Informationen in der mehrschichtigen Umgebungskarte zu verarbeiten, um verarbeitete Daten zu erlangen, und
eine Fortbewegungsstrecke für den selbstfahrenden Roboter gemäß den verarbeiteten Daten zu planen.

15. Computerlesbares Speichermedium, welches ein Computerprogramm speichert, wobei das Computerprogramm mittels eines Computers ausgeführt wird, um:
eine mehrschichtige Umgebungskarte eines Bearbeitungsraums zu erzeugen gemäß Informationen über Hindernisse in unterschiedlichen Höhen, welche mittels Sensorvorrichtungen akquiriert werden, welche in unterschiedlichen Höhen an einem selbstfahrenden Roboter angeordnet sind, beim Fortbewegen in dem Bearbeitungsraum, wobei die Sensorvorrichtungen, welche in unterschiedlichen Höhen angeordnet sind, den Bearbeitungsraum in eine Mehrzahl von Detektionsschichten einteilen,
Verarbeiten von Informationen in der mehrschichtigen Umgebungskarte, um verarbeitete Daten zu erlangen, wobei die mehrschichtige Umgebungskarte eine Mehrzahl von zweidimensionalen Karten aufweist, wobei jede von der Mehrzahl von zweidimensionalen Karten mit den Informationen über Hindernisse korrespondiert, welche in jeder jeweiligen Detektionsschicht detektiert werden, und
Planen einer Fortbewegungsstrecke für den selbstfahrenden Roboter gemäß den verarbeiteten Daten.

## Revendications

1. Procédé de planification du chemin d'un robot autopropulsé, comprenant les étapes suivantes :
acquérir (100), avec des ensembles de capteurs agencés sur un robot autopropulsé qui se déplace dans un espace d'intervention à différentes hauteurs, des informations d'obstacles à différentes hauteurs ; dans lequel les ensembles de capteurs agencés à différentes hauteurs, divisent l'espace d'intervention en une pluralité de couches de détection ;
générer une carte environnementale multicouche de l'espace d'intervention ; dans lequel la carte environnementale multicouche comprend une pluralité de cartes bidimensionnelles, chacune de la pluralité de cartes bidimensionnelles correspond aux informations des obstacles détectés au niveau de chaque couche de détection respective ;
traiter (200) les informations dans la carte environnementale multicouche afin d'obtenir des données traitées ; et
planifier (300) un chemin de déplacement du robot autopropulsé selon les données traitées.

2. Procédé selon la revendication 1, dans lequel l'étape de traitement (200) comprend une étape consistant à rassembler les informations des obstacles dans chaque carte bidimensionnelle afin d'obtenir les informations d'un ou de plusieurs des obstacles de l'espace d'intervention.

3. Procédé selon la revendication 1, dans lequel l'étape de traitement (200) comprend une étape consistant à croiser les régions de déplacement possible dans chaque carte bidimensionnelle afin d'obtenir des régions de déplacement possible.

4. Procédé selon la revendication 1, dans lequel l'étape de traitement (200) comprend les étapes suivantes :
rassembler les informations des obstacles dans chaque carte bidimensionnelle afin d'obtenir les informations d'un ou de plusieurs des obstacles de l'espace d'intervention ; et
croiser les régions de déplacement possible dans chaque carte bidimensionnelle afin d'obtenir les informations des régions de déplacement possible de l'espace d'intervention.

5. Procédé selon la revendication 2, dans lequel les régions de déplacement possible comprennent une ou plusieurs des régions dans l'espace d'intervention qui se trouvent à une distance des obstacles qui n'est pas inférieure à une valeur particulière.

6. Procédé selon la revendication 5, dans lequel la valeur particulière est comprise entre 10 et 30 centimètres.

7. Procédé selon la revendication 5, dans lequel l'étape de planification d'un chemin de déplacement du robot autopropulsé, comprend une étape consistant à sélectionner, dans l'une des régions de déplacement possible, un point de départ et un point d'arrivée du robot autopropulsé, le chemin le plus court entre le point de départ et le point d'arrivée, étant le chemin de déplacement.

8. Procédé selon la revendication 1, dans lequel la carte multicouche est une carte bidimensionnelle correspondant aux informations de répartition des obstacles à différentes hauteurs.

9. Procédé selon la revendication 8, dans lequel les informations des obstacles à différentes hauteurs de plans sont étiquetées de différentes façons.

10. Procédé selon la revendication 1, dans lequel l'étape d'obtention des données traitées comprend en outre les étapes suivantes :
déterminer si un nouveau chemin de déplacement doit être ajouté ; et
si un nouveau chemin de déplacement doit être ajouté, mettre à jour de manière correspondante la carte environnementale multicouche, et ensuite poursuivre ; ou
si un nouveau chemin de déplacement ne doit pas être ajouté, poursuivre sans mettre à jour la carte environnementale multicouche.

11. Procédé selon la revendication 1, dans lequel le robot autopropulsé se déplace dans l'espace d'intervention de telle manière que le robot autopropulsé balaie et détecte les régions périphériques sur le site, et se déplace vers une prochaine région non détectée jusqu'à détecter une ou plusieurs des régions dans l'espace d'intervention.

12. Procédé selon la revendication 1, dans lequel le robot autopropulsé se déplace dans l'espace d'intervention de telle manière que le robot autopropulsé pénètre directement dans une position médiane de l'espace d'intervention, balaie et détecte les régions périphériques au niveau de la position médiane, et se déplace vers une prochaine région non détectée jusqu'à détecter une ou plusieurs des régions dans l'espace d'intervention.

13. Procédé selon la revendication 1, dans lequel le robot autopropulsé déplace dans l'espace d'intervention selon déplacement transversal.

14. Robot autopropulsé, comprenant : des ensembles de capteurs (70) agencés sur le robot autopropulsé à différentes hauteurs, un processeur (20) et une mémoire (10) ; dans lequel les ensembles de capteurs agencés à différentes hauteurs, divisent l'espace d'intervention en une pluralité de couches de détection ;
dans lequel les ensembles de capteurs (70) sont couplés au processeur (20), et configurés afin d'acquérir des informations des obstacles à différentes hauteurs lorsque le robot autopropulsé se déplace dans un espace d'intervention ;
dans lequel la mémoire (10) est configurée pour stocker un programme ; et
dans lequel le processeur (20) est couplé à la mémoire, et configuré pour exécuter le programme stocké dans la mémoire :
générer une carte environnementale multicouche de l'espace d'intervention selon les informations acquises des obstacles à différentes hauteurs ; dans lequel la carte environnementale multicouche comprend une pluralité de cartes bidimensionnelles, chacune de la pluralité de cartes bidimensionnelles correspond aux informations des obstacles détectés au niveau de chaque couche de détection respective ;
traiter les informations dans la carte environnementale multicouche afin d'obtenir des données traitées ; et
planifier un chemin de déplacement du robot autopropulsé selon les données traitées.

15. Support de stockage pouvant être lu par un ordinateur, qui stocke un programme informatique, dans lequel le programme informatique est exécuté par un ordinateur afin de :
générer une carte environnementale multicouche d'un espace d'intervention selon des informations des obstacles à différentes hauteurs acquises par des ensembles de capteurs agencés sur un robot autopropulsé quand il se déplace dans l'espace d'intervention à différentes hauteurs ; dans lequel les ensembles de capteurs agencés à différentes hauteurs, divisent l'espace d'intervention en une pluralité de couches de détection ;
traiter les informations dans la carte environnementale multicouche afin d'obtenir des données traitées ; dans lequel la carte environnementale multicouche comprend une pluralité de cartes bidimensionnelles, chacune de la pluralité de cartes bidimensionnelles correspond aux informations des obstacles détectés au niveau de chaque couche de détection respective ; et
planifier un chemin de déplacement du robot autopropulsé selon les données traitées.
